# EUROPEAN PATENT APPLICATION

(11) **EP 4 746 492 A1**
(43) Date of publication of application: **20.05.2026**
(21) Application number: 24855620.1
(22) Date of filing: 07.08.2024
(51) Int. Cl.: H04W 24/02

(54) **COMMUNICATION METHOD, APPARATUS AND SYSTEM**

(30) Priority: 22.08.2023 CN 202311062221
(71) Applicant: Huawei Technologies Co., Ltd., Shenzhen, Guangdong 518129 (CN)
(72) Inventor: LI, Huan, Shenzhen, Guangdong 518129 (CN)
(74) Representative: Pfenning, Meinig & Partner mbB
(86) International application number: PCT/CN2024/110488
(87) International publication number: WO 2025/039894

(57) **Abstract**

Embodiments of this application provide a communication method and apparatus. The method may be performed by a base station. The method includes: receiving a first acknowledgement from a terminal device, where the first acknowledgement indicates that activation signaling of a secondary cell is correctly received; sending a probe data packet to the terminal device; receiving a second acknowledgement from the terminal device, where the second acknowledgement is an answer for the probe data packet, and the second acknowledgement indicates that data transmission is ready to be performed; and sending data to the terminal device. According to the method, after receiving the acknowledgement for the activation signaling, the base station actively detects whether the terminal device is ready to perform data transmission. If the terminal device is ready to perform data transmission, data transmission may be performed between the base station and the terminal device, so that data transmission time is advanced, thereby reducing a waiting time period, improving data transmission efficiency, and reducing communication latency. In addition, according to the method, communication flexibility is improved, and user experience can also be improved.

## Description

This application claims priority to Chinese Patent Application No. 202311062221.7, filed with the China National Intellectual Property Administration on August 22, 2023 and entitled "COMMUNICATION METHOD AHD APPARATUS, AND SYSTEM", which is incorporated herein by reference in its entirety.

### TECHNICAL FIELD

This application relates to the communication field, and in particular, to a communication method and apparatus, and a system.

### BACKGROUND

To improve a communication rate, the 3rd generation partnership project (3rd generation partnership project, 3GPP) introduces a carrier aggregation (carrier aggregation, CA) technology to aggregate a plurality of contiguous or non-contiguous component carriers (component carriers, CCs) for use. Therefore, the technology improves bandwidth utilization, thereby improving the communication rate. A component carrier accessed by a user is a primary component carrier (primary component carrier, PCC), and a cell in which the PCC is located is a primary cell (primary cell, PCell). In a plurality of carriers corresponding to a bandwidth used by CA, a carrier other than the PCC may be referred to as a secondary component carrier (secondary component carrier, SCC), and a cell in which the SCC is located is a secondary cell (secondary cell, SCell). The CA technology may improve uplink and downlink user-perceived peak rates by using resources and advantages of different carriers and different standards.

In a scenario in which the CA technology is used, a terminal device can perform data transmission by using the secondary cell only after the secondary cell is activated. Specifically, when the secondary cell is activated by a base station, the base station sends activation signaling to the terminal device, and the base station performs a series of actions of activating the secondary cell only when receiving an acknowledgement (acknowledgement, ACK). According to section 5.9 in 3GPP technical specification (technical specification, TS) 38.321, the terminal device may report, in specified time after the terminal device receives the activation signaling, a channel state information (channel state information, CSI) report of the secondary cell and the like. Data transmission between the terminal device and the base station should be performed after the reporting of the channel state information report of the secondary cell is completed. However, according to section 4.3 in TS 38.213, execution time for reporting the channel state information report of the secondary cell should be later than time T. For example, if the base station sends the activation signaling to the terminal device in a slot n, a value of T is n+k. For a specific setting of a value of k, refer to descriptions in section 4.3 in TS 38.213. As a result, data transmission efficiency in the scenario of the CA technology is affected.

### SUMMARY

This application describes a communication method and apparatus.

According to a first aspect, an embodiment of this application provides a communication method, to improve data transmission efficiency. The method may be performed by a base station. The method includes: receiving a first acknowledgement from a terminal device, where the first acknowledgement indicates that activation signaling of a secondary cell is correctly received; sending a probe data packet to the terminal device; receiving a second acknowledgement from the terminal device, where the second acknowledgement is an answer for the probe data packet, and the second acknowledgement indicates that data transmission is ready to be performed; and sending data to the terminal device. According to the method, after receiving the acknowledgement for the activation signaling, the base station actively detects whether the terminal device is ready to perform data transmission. If the terminal device is ready to perform data transmission, data transmission may be performed between the base station and the terminal device, so that data transmission time is advanced, thereby reducing a waiting time period, improving data transmission efficiency, and reducing communication latency. In addition, according to the method, communication flexibility is improved, and user experience can also be improved.

It may be understood that the data transmission includes uplink data transmission and downlink data transmission, and that the second acknowledgement indicates that data transmission is ready to be performed includes that data is ready to be received (downlink data transmission) and/or that data is ready to be sent (uplink data transmission). The foregoing descriptions are applicable to descriptions of other aspects in this application. Details are not described again.

In a possible implementation, after the sending the data to the terminal device, the method further includes: receiving a channel state information report of the secondary cell from the terminal device. For example, the channel state information report is a CSI report.

In a possible implementation, the probe data packet includes a filler data packet or a control data packet. For example, the control data packet may be a control frame. In this implementation, a value of a logical channel identifier in a medium access control header of the filler data packet includes 63 or any value from 35 to 46. When the value is 63, the filler data packet is a padding data packet.

In a possible implementation, the activation signaling includes a medium access control-control element. For example, the activation signaling may be a MAC-CE.

In a possible implementation, before the receiving the first acknowledgement from the terminal device, the method further includes: sending the activation signaling to the terminal device. In this implementation, before the receiving the first acknowledgement from the terminal device, after the sending the activation signaling to the terminal device, the method may further include: receiving a first negative acknowledgement from the terminal device, where the first negative acknowledgement is an answer for the activation signaling, and the first negative acknowledgement indicates that the reception of the activation signaling fails; and sending the activation signaling to the terminal device again. The first negative acknowledgement may include a hybrid automatic repeat request-negative acknowledgement.

In a possible implementation, before the receiving the second acknowledgement from the terminal device, the method further includes: receiving a second negative acknowledgement from the terminal device; and sending the probe data packet to the terminal device again. In this implementation, the second negative acknowledgement includes a hybrid automatic repeat request-negative acknowledgement, for example, a HARQ-NACK. The descriptions are applicable to descriptions of other aspects in this application. Details are not described again.

In a possible implementation, the first acknowledgement may include a hybrid automatic repeat request-acknowledgement. For example, the hybrid automatic repeat request-acknowledgement may be a HARQ-ACK. The descriptions are applicable to descriptions of other aspects in this application. Details are not described again.

In a possible implementation, synchronization with the terminal device is completed. The synchronization may be synchronization of a synchronization signal block. In other words, after receiving the second acknowledgement, synchronization of the synchronization signal block is completed between the terminal device and the base station, and then data transmission is performed. Synchronization time may be before the detection data packet is sent, or may be before data transmission is performed. This is not limited in this application.

According to a second aspect, an embodiment of this application provides a communication method, to improve data transmission efficiency. The method may be performed by a terminal device. The method includes: sending a first acknowledgement to a base station, where the first acknowledgement indicates that activation signaling of a secondary cell is correctly received; receiving a probe data packet from the base station; sending a second acknowledgement to the base station, where the second acknowledgement is an answer for the probe data packet, and the second acknowledgement indicates that data transmission is ready to be performed; and receiving data from the base station. For beneficial effects of the method, refer to the descriptions in the first aspect. Details are not described again.

In a possible implementation, after the receiving the data from the base station, the method further includes: sending a channel state information report of the secondary cell to the base station.

In a possible implementation, the probe data packet includes a filler data packet or a control data packet. For this implementation, refer to corresponding descriptions in the first aspect.

In this implementation, a value of a logical channel identifier in a medium access control header of the filler data packet is 63 or any value from 35 to 46. For this implementation, refer to corresponding descriptions in the first aspect.

In a possible implementation, the activation signaling includes a medium access control-control element. For this implementation, refer to corresponding descriptions in the first aspect.

In a possible implementation, before the sending the first acknowledgement to the base station, the method further includes: receiving the activation signaling from the base station.

In this implementation, before the sending the first acknowledgement to the base station, after the receiving the activation signaling from the base station, the method further includes: sending a first negative acknowledgement to the base station, where the first negative acknowledgement is an answer for the activation signaling, and the first negative acknowledgement indicates that the reception of the activation signaling fails; and receiving the activation signaling from the base station. The first negative acknowledgement includes a hybrid automatic repeat request-negative acknowledgement.

In a possible implementation, before the sending the second acknowledgement to the base station, the method further includes: sending a second negative acknowledgement to the base station; and receiving the probe data packet from the base station again. In this implementation, the second negative acknowledgement may include a hybrid automatic repeat request-negative acknowledgement.

In a possible implementation, the first acknowledgement includes a hybrid automatic repeat request-acknowledgement. For this implementation, refer to corresponding descriptions in the first aspect.

In a possible implementation, synchronization of a synchronization signal block is completed with the base station. For this implementation, refer to corresponding descriptions in the first aspect.

According to a third aspect, an embodiment of this application provides a communication apparatus. In an optional implementation, the apparatus may include a module in one-to-one correspondence with the method/operation/step/action according to the first aspect to the fourth aspect. The module may be a hardware circuit, may be software, or may be implemented by a combination of a hardware circuit and software. In an optional implementation, the communication apparatus includes a baseband apparatus, or includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit may implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as the transceiver unit, and the functional module may implement the sending function and the receiving function. Alternatively, the sending unit and the receiving unit may be different functional modules, and the transceiver unit is a general term for these functional modules.

In an optional implementation, the communication apparatus includes a processor. The processor is configured to read a program from a memory and run the program, to implement the method according to any one of the first aspect and the possible implementations of the first aspect, or implement the method according to any one of the second aspect and the possible implementations of the second aspect.

According to a fourth aspect, an embodiment of this application provides a computer program product including instructions. When the instructions are run on a computer, the computer is caused to implement the method according to any one of the first aspect and the possible implementations of the first aspect, or implement the method according to any one of the second aspect and the possible implementations of the second aspect.

According to a fifth aspect, an embodiment of this application provides a computer-readable storage medium. The computer-readable storage medium stores instructions, and when the instructions are run on a computer, a processor is caused to implement the method according to any one of the first aspect and the possible implementations of the first aspect, or implement the method according to any one of the second aspect and the possible implementations of the second aspect.

According to a sixth aspect, an embodiment of this application provides a chip. The chip includes a processor and an interface circuit, the interface circuit is coupled to the processor, and the processor is configured to run a computer program or instructions, so that the method according to any one of the first aspect and the possible implementations of the first aspect is implemented, or the method according to any one of the second aspect and the possible implementations of the second aspect is implemented.

### BRIEF DESCRIPTION OF DRAWINGS

FIG. 1 is a diagram of a network architecture of a communication system to which this application is applicable;
FIG. 2 is a diagram of a communication method according to this application;
FIG. 3 is a schematic flowchart of a communication method according to this application;
FIG. 4 is a diagram of a communication apparatus according to an embodiment of this application; and
FIG. 5 is a diagram of another communication apparatus according to an embodiment of this application.

### DESCRIPTION OF EMBODIMENTS

To make objectives, technical solutions, and advantages in embodiments of this application clearer, the following further describes embodiments of this application in detail with reference to the accompanying drawings. The technical solutions in embodiments of this application may be applied to various communication systems, for example, a long term evolution (long term evolution, LTE) network, an LTE frequency division duplex (frequency division duplex, FDD) network, an LTE time division duplex (time division duplex, TDD) network, a 5th generation (5th generation, 5G) mobile communication network or a new radio (new radio, NR) network, a non-terrestrial network (non-terrestrial network, NTN), a future communication network, or another similar communication network. In this application, a network may also be referred to as a system. A Network architecture and a service scenario described in this application are intended to describe the technical solutions in this application more clearly, and do not constitute a limitation on the technical solutions provided in this application. A person of ordinary skill in the art may learn that with evolution of a network architecture and emergence of a new service scenario, the technical solutions provided in this application are also applicable to resolving similar technical problems.

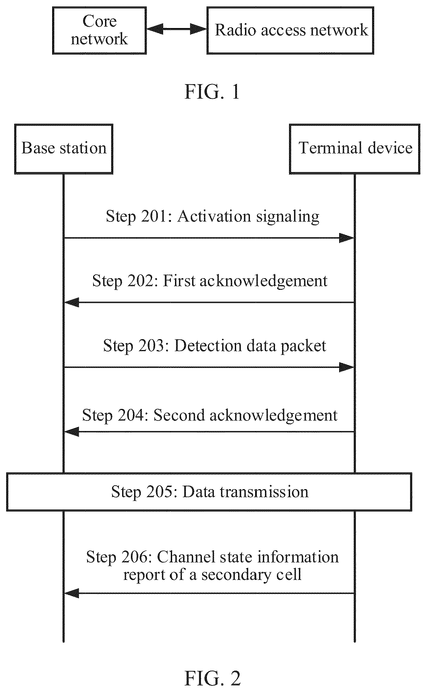

FIG. 1 is a diagram of a possible and non-limiting system. As shown in FIG. 1, a communication system includes a radio access network (radio access network, RAN) and a core network (core network, CN). The RAN includes at least one RAN node and at least one user equipment. The RAN may also include another RAN node, for example, a wireless relay device and/or a wireless backhaul device (not shown in FIG. 1). The user equipment is connected to the RAN node in a wireless manner. The RAN node is connected to the core network in a wireless or wired manner. A core network device in the core network and the RAN node in the RAN may be different physical devices, or may be a same physical device that integrates a logical function of the core network and a logical function of the radio access network.

The RAN may be a cellular system related to the 3rd generation partnership project (3rd generation partnership project, 3GPP), for example, a 4G or 5G mobile communication system or a future-oriented evolved system (for example, a 6G mobile communication system). Alternatively, the RAN may be an open access network (open RAN, O-RAN or ORAN), a non-terrestrial network (non-terrestrial network, NTN) system, or a wireless fidelity (wireless fidelity, Wi-Fi) system. Alternatively, a RAN 100 may be a communication system that integrates the foregoing two or more systems.

The RAN node may also be sometimes referred to as an access network device, a RAN entity, an access node, or the like, and constitutes a part of the communication system, to help a terminal implement radio access. A plurality of RAN nodes in the communication system may be nodes of a same type, or may be nodes of different types. The RAN node and the user equipment are sometimes referred to as communication apparatuses.

In a possible scenario, the RAN node may be a base station (base station), a satellite base station, an evolved NodeB (evolved NodeB, eNodeB), a transmission reception point (transmission reception point, TRP), a next generation NodeB (next generation NodeB, gNB), a next generation base station in a 6th generation (6th generation, 6G) mobile communication system, a base station in a future mobile communication system, an access node in the Wi-Fi system, or the like. The RAN node may be a macro base station, a micro base station, an indoor base station, a relay node, or a donor node, or may be a radio controller in a cloud radio access network (cloud radio access network, CRAN) scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist the user equipment in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU) or an active antenna unit (active antenna unit, AAU).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

The user equipment (user equipment, UE) may also be referred to as a terminal, an access terminal, a subscriber unit, a subscriber station, a mobile station, a remote station, a remote terminal, a mobile device, a user terminal, a wireless communication device, a user agent, a user apparatus, or a target terminal. The terminal may be a passive internet of things terminal, or may be a tag. The terminal may be a passive device. The passive device may be a passive tag. The passive tag may collect energy by using a backscattering technology, to receive and send a packet. The passive tag includes but is not limited to a terminal tag without a power supply, for example, radio frequency identification (radio frequency identification, RFID), Bluetooth, or Zigbee. The terminal may alternatively be a semi-passive device or an active device. The active device may be a device having a wireless transceiver function, for example, a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G mobile communication system, or a terminal in a future evolved network. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that may be directly worn on the body or integrated into clothes or an accessory of a user. The wearable device is a hardware device, and also implements a powerful function through software support, data exchange, and cloud interaction. In a broad sense, the wearable intelligent device includes full-featured and large-sized devices that may implement complete or partial functions without depending on smartphones, such as smart watches or smart glasses, and devices that are dedicated to only one type of application function and need to work with other devices such as the smartphones, such as various smart bands or smart jewelry for monitoring physical signs.

The foregoing function network element may be a network element in a hardware device, a software function running on dedicated hardware, or a virtualization function instantiated on a platform (for example, a cloud platform). One or more services may be obtained through division based on the foregoing function network element. Further, a service independent of a network function may exist. In this application, an instance of the foregoing function network element, an instance of the foregoing service included in the function network element, or an instance of the service independent of the network function may be referred to as a service instance. For ease of description, the RAN node in this application is described by using a base station.

To improve a communication rate, the 3rd generation partnership project (3rd generation partnership project, 3GPP) introduces a carrier aggregation (carrier aggregation, CA) technology to aggregate a plurality of contiguous or non-contiguous component carriers (component carriers, CCs) for use. Therefore, the technology improves bandwidth utilization, thereby improving the communication rate. A component carrier accessed by a user is a primary component carrier (primary component carrier, PCC), and a cell in which the PCC is located is a primary cell (primary cell, PCell). In a plurality of carriers corresponding to a bandwidth used by CA, a carrier other than the PCC may be referred to as a secondary component carrier (secondary component carrier, SCC), and a cell in which the SCC is located is a secondary cell (secondary cell, SCell). The CA technology may improve uplink and downlink user-perceived peak rates by using resources and advantages of different carriers and different technologies.

In a scenario in which the CA technology is used, a terminal device can perform data transmission (send uplink data or receive downlink data) by using the secondary cell only after the secondary cell is activated. Specifically, when the secondary cell is activated by the base station, the base station sends, to the terminal device, activation signaling like a medium access control-control element (medium access control-control element, MAC-CE). Then, the base station performs a series of actions for activating the secondary cell only when the terminal device sends an acknowledgement (acknowledgement, ACK) to the base station. According to section 5.9 in 3GPP technical specification (technical specification, TS) 38.321, the terminal device may send, in specified time after the terminal device receives the activation signaling, a sounding reference signal (sounding reference signal, SRS) in the secondary cell, report a channel state information (channel state information, CSI) report of the secondary cell, detect a physical downlink control channel (physical downlink control channel, PDCCH) in the secondary cell, and the like. Data transmission between the base station and the terminal device should be performed after the reporting of the channel state information report of the secondary cell is completed. However, according to section 4.3 in TS 38.213, execution time for reporting the channel state information report of the secondary cell should be later than time T. For example, if the base station sends the activation signaling to the terminal device in a slot n, a value of T is n+k. For a specific setting of a value of k, refer to descriptions in section 4.3 in TS 38.213. Details are not described herein again. However, the terminal device may be ready to perform data transmission before reporting the channel state information report of the secondary cell. As a result, data transmission efficiency in the scenario of the CA technology is affected.

Therefore, this application describes a communication method, to resolve the foregoing problem.

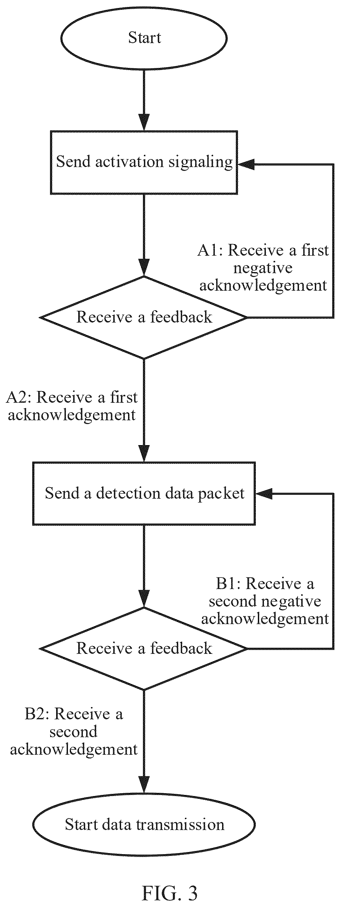

FIG. 2 shows a communication method according to this application. The method is described by using an example in which a radio access network is a base station and user equipment is a terminal device. It may be understood that, a primary cell and a secondary cell may be provided by a same base station, or may be provided by different base stations. This is not limited in this application. FIG. 3 is a schematic flowchart of a communication method according to this application. The diagram is described from a perspective of a base station. With reference to FIG. 2 and FIG. 3, the method may include the following steps.

Step 201: The base station sends activation signaling to the terminal device.

Correspondingly, the terminal device receives the activation signaling from the base station.

The activation signaling is for activating a secondary cell of the base station. For example, the activation signaling may be a MAC-CE.

Step 202: The terminal device sends a first acknowledgement to the base station.

Correspondingly, the base station receives the first acknowledgement from the terminal device.

For example, after verification on the activation signaling is correct, the terminal device performs step 202. Correct verification may also be understood as successful verification, or may be understood as successful parsing. This is not limited in this application. The step is like A2 shown in FIG. 3, and step 203 is subsequently performed.

The first acknowledgement is an answer for the activation signaling in step 201. For example, the first acknowledgement includes a hybrid automatic repeat request-acknowledgement (hybrid automatic repeat request-acknowledgement, HARQ-ACK).

It may be understood that, before step 202 is performed, if the verification performed by the terminal device on the activation signaling fails, the terminal device sends a first negative acknowledgement (negative acknowledgement, NACK) to the base station, for example, A1 shown in FIG. 3. For example, the first negative acknowledgement is a hybrid automatic repeat request-negative acknowledgement (hybrid automatic repeat request-negative acknowledgement, HARQ-NACK). In this case, after receiving the first negative acknowledgement, the base station performs step 201 again until step 202 is performed. The base station may immediately perform step 201 after receiving the first negative acknowledgement, or may wait for a time period before performing step 201. Time for performing step 201 may be set according to an actual product requirement. This is not limited in this application.

Step 203: The base station sends a detection data packet to the terminal device.

The detection data packet is for detecting whether the terminal device is ready to perform data transmission, to be specific, for detecting whether the terminal device is ready to receive downlink data or is ready to send data (send uplink data). In this application, the data transmission may include data transmission in at least one of an uplink direction or a downlink direction.

For example, the detection data packet may be a filler data packet, or may be a control data packet, where the control data packet may also be referred to as a control frame, and the filler data packet may also be referred to as a dummy data packet or a padding data packet. In a specific implementation, when the detection data packet is the data filling packet, a value of a logical channel identifier (logical channel ID, LCID) in a medium access control header of the data filling packet is 63, or any value in reserved (reserved) values from 35 to 46. It may be understood that, during specific implementation, a data filling packet whose LCID value is not equal to 63 may also be used as the detection data packet, which depends on a specific implementation.

Step 204: The terminal device sends a second acknowledgement to the base station.

The second acknowledgement is an answer for the detection data packet in step 203.

The second acknowledgement may be the same as or different from the first acknowledgement. That the second acknowledgement is the same as the first acknowledgement means that a data structure of a data packet for the second acknowledgement is the same as a data structure of a data packet for the first acknowledgement, or information content included in the data packet for the second acknowledgement is the same as information content included in the data packet for the first acknowledgement. For example, both the first acknowledgement and the second acknowledgement are hybrid automatic repeat request-acknowledgements. That the second acknowledgement is different from the first acknowledgement means that the data structure of the data packet for the second acknowledgement is different from the data structure of the data packet for the first acknowledgement, or the information content included in the data packet for the second acknowledgement is different from the information content included in the data packet for the first acknowledgement is different. This is not limited in this application.

For example, when the terminal device is ready to perform data transmission, step 204 is performed. It may also be understood that, the second acknowledgement data packet is for notifying the base station that the terminal device is ready to perform data transmission or the terminal device may perform data transmission. The step is like B2 shown in FIG. 3, and step 205 is subsequently performed.

Certainly, a prerequisite for performing the step is that the terminal device correctly parses out the detection data packet in step 203. If the terminal device cannot correctly parse out the detection data packet, the terminal device sends a second negative acknowledgement to the base station.

Similarly, before performing step 204, if the terminal device is not ready to perform data transmission, the terminal device sends the second negative acknowledgement to the base station. The step is like B1 shown in FIG. 3. In this case, after receiving the second negative acknowledgement, the base station performs step 203 again. The base station may immediately perform step 203 after receiving the second negative acknowledgement, or may wait for a time period before performing step 203. This is not limited in this application.

Step 205: Perform data transmission.

The base station may start sending of data, in other words, the base station sends the data to the terminal device.

In addition, the terminal device may also start uploading of data, in other words, the terminal sends the data to the base station.

In a possible case, step 206 is performed immediately or after first time. A length of the first time is not limited.

In a possible implementation, before step 203 is performed, or before step 205 is performed, synchronization is completed between the terminal device and the base station. For example, the synchronization is synchronization of a synchronization signal block (synchronization signal block, SSB).

Step 206: The terminal device sends a channel state information report of the secondary cell to the base station.

For a specification of uplink sending time of the channel state information report, refer to descriptions in section 4.3 in TS 38.213 and section 8.3.2 in TS 38.133 in 3GPP. Details are not described again.

Subsequently, the terminal device may continue to perform uplink data transmission, and the base station may send the downlink data to the terminal device.

According to the method, after receiving the acknowledgement for the activation signaling, the base station actively detects whether the terminal device is ready to perform data transmission. If the terminal device is ready to perform data transmission, data transmission may be performed between the base station and the terminal device, without performing data transmission after waiting for the terminal device to send the channel state information report of the secondary cell to the base station. In this way, data transmission time is advanced, thereby reducing a waiting time period, improving data transmission efficiency, and reducing communication latency. In addition, according to the method, communication flexibility is improved, and user experience can also be improved.

It may be understood that, a CA scenario to which this embodiment is applicable may include but is not limited to a multi-CC scenario, like a 2CC, 3CC, 4CC, or 5CC scenario, and this embodiment may also be applicable to a low-frequency CA scenario, a high-frequency CA scenario, and an inter-frequency CA scenario.

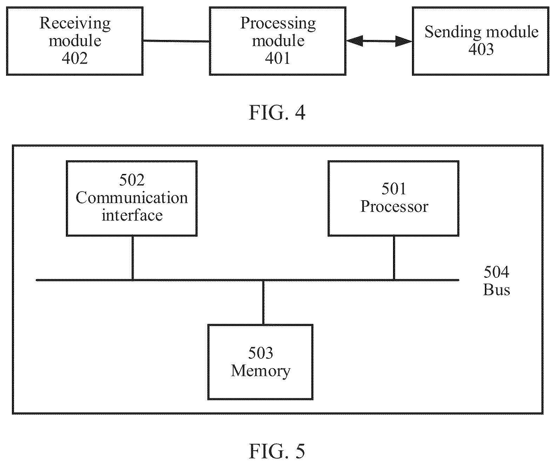

FIG. 4 and FIG. 5 each are a diagram of a structure of a possible communication apparatus according to this disclosure. The communication apparatuses may be configured to implement functions of the base station, modules (such as a CU, a DU, and an RU) of the base station, and the like in the foregoing methods. Therefore, beneficial effects of the foregoing methods may also be implemented.

Based on the method embodiment shown in FIG. 2, FIG. 4 is a diagram of a communication apparatus according to an embodiment of this application.

The communication apparatus includes a processing module 401, a receiving module 402, and a sending module 403. The processing module 401 is configured to implement data processing by the communication apparatus. The receiving module 402 is configured to receive content between the communication apparatus and another unit or network element, and the sending module 403 is configured to receive the content between the communication apparatus and the another unit or the network element. It may be understood that, the processing module 401 in this embodiment of this application may be implemented by a processor or a processor-related circuit component (or referred to as a processing circuit), and the receiving module 402 may be implemented by a receiver or a receiver-related circuit component. The sending module 403 may be implemented by a transmitter or a transmitter-related circuit component.

For example, the communication apparatus may be a communication apparatus device, or may be a chip used in the communication apparatus device or another combined device or component with a function of the communication apparatus device.

When the communication apparatus is configured to implement a function of a base station, the receiving module 402 is configured to receive a first acknowledgement from a terminal device (for example, step 202 in FIG. 2), where the first acknowledgement indicates that activation signaling of a secondary cell is correctly received; the sending module 403 is configured to send a probe data packet to the terminal device (for example, step 203 in FIG. 2); the receiving module 402 is configured to receive a second acknowledgement from the terminal device (for example, step 204 in FIG. 2), where the second acknowledgement is an answer for the probe data packet, and the second acknowledgement indicates that data transmission is ready to be performed; and the sending module 403 is configured to send data to the terminal device (for example, step 205 in FIG. 2).

In addition, the foregoing modules may be further configured to support another process of the technology described in this specification. For beneficial effects, refer to the foregoing descriptions. Details are not described herein again.

When the communication apparatus is configured to implement a function of a terminal device, the sending module 403 is configured to send a first acknowledgement to a base station (for example, step 202 in FIG. 2), where the first acknowledgement indicates that activation signaling of a secondary cell is correctly received; the receiving module 402 is configured to receive a probe data packet from the base station (for example, step 203 in FIG. 2); and the sending module 403 is configured to send a second acknowledgement to the base station (for example, step 204 in FIG. 2), where the second acknowledgement is an answer for the probe data packet, and the second acknowledgement indicates that data transmission is ready to be performed; and the receiving module 402 is configured to receive data from the base station (for example, step 205 in FIG. 2).

In addition, the foregoing modules may be further configured to support another process of the technology described in this specification. For beneficial effects, refer to the foregoing descriptions. Details are not described herein again.

Based on the method embodiment shown in FIG. 2, FIG. 5 is a diagram of another communication apparatus according to an embodiment of this application. The communication apparatus includes a processor 501, a communication interface 502, and a memory 503. The processor 501, the communication interface 502, and the memory 503 may be connected to each other through a bus 504. The bus 504 may be a peripheral component interconnect (peripheral component interconnect, PCI) bus, an extended industry standard architecture (extended industry standard architecture, EISA) bus, or the like. The foregoing bus 504 may be classified into an address bus, a data bus, a control bus, and the like. For ease of representation, the bus is represented by using only one line in FIG. 5. However, it does not mean that there is only one bus or only one type of bus. The processor 501 may be a central processing unit (central processing unit, CPU), a network processor (network processor, NP), or a combination of a CPU and an NP. The processor may further include a hardware chip. The foregoing hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable gate array (field-programmable gate array, FPGA), a generic array logic (Generic Array Logic, GAL), or any combination thereof. The memory 503 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The processor 501 is configured to implement a data processing operation of the communication apparatus. The communication interface 502 is configured to implement a receiving operation and a sending operation of the communication apparatus.

For example, the communication apparatus may be any base station in FIG. 2 or FIG. 3.

When the communication apparatus is configured to implement a function of a base station, the communication interface 502 is configured to receive a first acknowledgement from a terminal device (for example, step 202 in FIG. 2), where the first acknowledgement indicates that activation signaling of a secondary cell is correctly received; the communication interface 502 is configured to send a probe data packet to the terminal device (for example, step 203 in FIG. 2); the communication interface 502 is configured to receive a second acknowledgement from the terminal device (for example, step 204 in FIG. 2), where the second acknowledgement is an answer for the probe data packet, and the second acknowledgement indicates that data transmission is ready to be performed; and the communication interface 502 is configured to send data to the terminal device (for example, step 205 in FIG. 2).

In addition, the foregoing modules may be further configured to support another process of the technology described in this specification. For beneficial effects, refer to the foregoing descriptions. Details are not described herein again.

For example, the communication apparatus may be any terminal device in FIG. 2 or FIG. 3.

When the communication apparatus is configured to implement a function of a terminal device, the communication interface 502 is configured to send a first acknowledgement to a base station (for example, step 202 in FIG. 2), where the first acknowledgement indicates that activation signaling of a secondary cell is correctly received; the communication interface 502 is configured to receive a probe data packet from the base station (for example, step 203 in FIG. 2); and the communication interface 502 is configured to send a second acknowledgement to the base station (for example, step 204 in FIG. 2), where the second acknowledgement is an answer for the probe data packet, and the second acknowledgement indicates that data transmission is ready to be performed; and the communication interface 502 is configured to receive data from the base station (for example, step 205 in FIG. 2).

In addition, the foregoing modules may be further configured to support another process of the technology described in this specification. For beneficial effects, refer to the foregoing descriptions. Details are not described herein again.

An embodiment of this application further provides a computer-readable storage medium. The computer-readable storage medium stores a computer program. When the computer program is executed by a computer, the computer may implement a procedure related to the base station in any one of embodiments shown in FIG. 2 or FIG. 3 provided in the foregoing method embodiments, or the computer may implement a procedure related to the terminal device in any one of embodiments shown in FIG. 2 or FIG. 3 provided in the foregoing method embodiments.

An embodiment of this application further provides a computer program product. The computer program product stores a computer program. When the computer program is executed by a computer, the computer may implement a procedure related to the base station in any one of embodiments shown in FIG. 2 or FIG. 3 provided in the foregoing method embodiments, or the computer may implement a procedure related to the terminal device in any one of embodiments shown in FIG. 2 or FIG. 3 provided in the foregoing method embodiments.

This application further provides a chip, including a processor. The processor is configured to read and run a computer program stored in a memory, to perform a corresponding operation and/or procedure performed by the base station or the terminal device in the methods provided in this application. Optionally, the chip further includes the memory, the memory and the processor are connected to the memory through a circuit or a wire, and the processor is configured to read and execute the computer program in the memory. Optionally, the chip further includes a communication interface, and the processor is connected to the communication interface. The communication interface is configured to receive data and/or information to be processed, and the processor obtains the data and/or the information from the communication interface and processes the data and/or the information. The communication interface may be an input/output interface, an interface circuit, an output circuit, an input circuit, a pin, a related circuit, or the like on the chip. The processor may alternatively be embodied as a processing circuit or a logic circuit.

The foregoing chip may alternatively be replaced with a chip system. Details are not described herein again.

The terms "include", "have" and any other variants thereof in this application are intended to cover non-exclusive inclusion. For example, a process, method, system, product, or device that includes a series of steps or units is not necessarily limited to the steps or units that are expressly listed, but may include other steps or units that are not expressly listed or are inherent to such a process, method, product, or device.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects.

A system architecture and a service scenario described in embodiments of this application are intended to describe the technical solutions in embodiments of this application more clearly, and do not constitute a limitation on the technical solutions provided in embodiments of this application. A person of ordinary skill in the art may learn that with evolution of a network architecture and emergence of a new service scenario, the technical solutions provided in embodiments of this application are also applicable to resolving similar technical problems.

A person of ordinary skill in the art may be easily aware that, the units and algorithm steps in the examples described with reference to embodiments disclosed in this specification may be implemented by electronic hardware or a combination of computer software and electronic hardware. Whether the functions are performed by hardware or software depends on particular application and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it may be understood that, the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual conditions to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for causing a computer device (which may be a personal computer, a server, a network device, or the like) to perform all or some of the steps of the methods described in embodiments of this application. The foregoing storage medium includes any medium that may store program code, like a USB flash drive, a removable hard disk, a read-only memory (read-only memory, ROM), a random access memory (random access memory, RAM), a magnetic disk, or an optical disc.

In addition, the terms "first", "second", and the like in the specification, claims, and accompanying drawings of this application are intended to distinguish between different objects, but are not intended to describe a specific order. In addition, the terms "include" and "have" and any other variants thereof are intended to cover a non-exclusive inclusion. For example, a process, a method, a system, a product, or a device that includes a series of steps or units is not limited to the steps or units that are listed, but optionally further includes the steps or units that are not listed, or optionally further includes other inherent steps or units of the process, the method, the product, or the device.

Although this application is described with reference to specific features and embodiments thereof, it is clear that, various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that, a person skilled in the art may make various modifications and variations to this application without departing from the spirit and scope of this application. This application is intended to cover the modifications and variations of this application provided that the modifications and variations of this application fall within the scope of protection defined by the following claims and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving a first acknowledgement from a terminal device, wherein the first acknowledgement indicates that activation signaling of a secondary cell is correctly received;
sending a probe data packet to the terminal device;
receiving a second acknowledgement from the terminal device, wherein the second acknowledgement is an answer for the probe data packet, and the second acknowledgement indicates that data transmission is ready to be performed; and
sending data to the terminal device.

2. The method according to claim 1, wherein after the sending the data to the terminal device, the method further comprises:
receiving a channel state information report from the terminal device.

3. The method according to claim 1 or 2, wherein the probe data packet comprises a filler data packet or a control data packet.

4. The method according to claim 3, wherein a value of a logical channel identifier in a medium access control header of the filler data packet comprises 63 or any value from 35 to 46.

5. The method according to any one of claims 1 to 4, wherein the activation signaling comprises a medium access control-control element.

6. The method according to any one of claims 1 to 5, wherein before the receiving the first acknowledgement from the terminal device, the method further comprises:
sending the activation signaling to the terminal device.

7. The method according to claim 6, wherein before the receiving the first acknowledgement from the terminal device, after the sending the activation signaling to the terminal device, the method further comprises:
receiving a first negative acknowledgement from the terminal device, wherein the first negative acknowledgement is an answer for the activation signaling, and the first negative acknowledgement indicates that the reception of the activation signaling fails; and
sending the activation signaling to the terminal device again.

8. The method according to claim 7, wherein the first negative acknowledgement comprises a hybrid automatic repeat request-negative acknowledgement.

9. The method according to any one of claims 1 to 8, wherein before the receiving the second acknowledgement from the terminal device, the method further comprises:
receiving a second negative acknowledgement from the terminal device; and
sending the probe data packet to the terminal device again.

10. The method according to claim 9, wherein the second negative acknowledgement comprises a hybrid automatic repeat request-negative acknowledgement.

11. The method according to any one of claims 1 to 10, wherein the first acknowledgement comprises a hybrid automatic repeat request-acknowledgement.

12. The method according to any one of claims 1 to 11, wherein before the sending the probe data packet to the terminal device, synchronization with the terminal device is completed.

13. A communication method, wherein the method comprises:
sending a first acknowledgement to a base station, wherein the first acknowledgement indicates that activation signaling of a secondary cell is correctly received;
receiving a probe data packet from the base station;
sending a second acknowledgement to the base station, wherein the second acknowledgement is an answer for the probe data packet, and the second acknowledgement indicates that data transmission is ready to be performed; and
receiving data from the base station.

14. The method according to claim 13, wherein after the receiving the data from the base station, the method further comprises:
sending a channel state information report to the base station.

15. The method according to claim 13 or 14, wherein the probe data packet comprises a filler data packet or a control data packet.

16. The method according to claim 15, wherein a value of a logical channel identifier in a medium access control header of the filler data packet is 63 or any value from 35 to 46.

17. The method according to any one of claims 13 to 16, wherein the activation signaling comprises a medium access control-control element.

18. The method according to any one of claims 13 to 17, wherein before the sending the first acknowledgement to the base station, the method further comprises:
receiving the activation signaling from the base station.

19. The method according to claim 18, wherein before the sending the first acknowledgement to the base station, after the receiving the activation signaling from the base station, the method further comprises:
sending a first negative acknowledgement to the base station, wherein the first negative acknowledgement is an answer for the activation signaling, and the first negative acknowledgement indicates that the reception of the activation signaling fails; and
receiving the activation signaling from the base station.

20. The method according to claim 19, wherein the first negative acknowledgement comprises a hybrid automatic repeat request-negative acknowledgement.

21. The method according to any one of claims 13 to 20, wherein before the sending the second acknowledgement to the base station, the method further comprises:
sending a second negative acknowledgement to the base station; and
receiving the probe data packet from the base station again.

22. The method according to claim 21, wherein the second negative acknowledgement comprises a hybrid automatic repeat request-negative acknowledgement.

23. The method according to any one of claims 13 to 22, wherein the first acknowledgement comprises a hybrid automatic repeat request-acknowledgement.

24. The method according to any one of claims 13 to 23, wherein before the receiving the probe data packet from the base station, synchronization with the base station is completed.

25. A communication apparatus, comprising a unit configured to perform the method according to any one of claims 1 to 12.

26. A communication apparatus, comprising a unit configured to perform the method according to any one of claims 13 to 24.

27. A communication apparatus, comprising a processor and a memory, wherein the processor is coupled to the memory, and the processor is configured to implement the method according to any one of claims 1 to 12.

28. A communication apparatus, comprising a processor and a memory, wherein the processor is coupled to the memory, and the processor is configured to implement the method according to any one of claims 13 to 24.

29. A computer-readable storage medium, wherein the computer-readable storage medium stores instructions, and when the instructions are run on a computer, a processor is caused to perform the method according to any one of claims 1 to 12 or 13 to 24.

30. A computer program product comprising instructions, wherein when the instructions are run on a computer, the computer is caused to perform the method according to any one of claims 1 to 12 or 13 to 24.
